# EUROPEAN PATENT APPLICATION

(11) **EP 1 087 618 A2**
(43) Date of publication of application: **28.03.2001**
(21) Application number: 00308339.1
(22) Date of filing: 22.09.2000
(51) Int. Cl.: H04N 7/16

(54) **Opinion feedback in presentation imagery**

(30) Priority: 27.09.1999 US 406475
(71) Applicant: Be Here Corporation, Cupertino, California 95014 (US)
(72) Inventor: Driscoll, Edward C., Jr., Portola Valley, California 94028 (US); Furlan, John, Palo Alto, California 94301 (US)
(74) Representative: Leeming, John Gerard

(57) **Abstract**

The invention provides a method and system for view direction feedback in immersive imagery, such as used in conjunction with an internetworking environment. A presentation server and a presentation client cooperate to determine which portions of an immersive presentation to present to a viewer, in response to a time series of view direction information received from the viewer. The presentation client maintains a record of view direction information for use by the presentation server or another device, so as to evaluate match between the presentation and the viewer. The record of view direction, herein called a VDL (view direction log), provides a set of general capabilities for the presentation server, the presentation client, and other devices. The invention has general applicability to e-commerce to entertainment, to teaching, training, and evaluation, to monitoring, and to non-immersive presentations and to non-visual biometric feedback.

## Description

### Background of the Invention

### 1. Field of the Invention

This invention relates to view direction feedback in presentation imagery.

### 2. Related Art

In multimedia presentations, including visual media (such as drawings and pictures) and streaming media (such as animation, streaming audio, motion pictures, and streaming video), it sometimes occurs that the presentation depends on the point of view of the viewer. For example, in a presentation of an immersive image (for example, one in which the viewer has the ability to select a wide range of angles at which to view the presentation), it is desirable to know which portions of the presentation the viewer is most interested in. This allows the presenter to concentrate on communication of presentation data relating to those portions, with consequent improvement in detail of the presentation.

In media presentations involving viewer participation, it is sometimes advantageous to obtain feedback from the viewer(s) and for the presenter, so as to determine which portions of the presentation are of interest to viewers (either specific viewers or an aggregate or set of viewers). This allows the presenter to improve the quality of the presentation, particularly when the presentation is for a specific purpose, such as encouraging viewers of the presentation to purchase goods or services. This has sometimes been performed in the known art with web server information, in which a record of web pages visited by web clients can be maintained, and the information used to determine which portions of the web site are most attractive.

One problem in the known art is that it is difficult to determine what portions of an image or what text on a page a viewer pays most attention to. Although known systems sometimes record which web pages are requested by the viewer, they have the drawback of being unable to determine what portions of those web pages are important to the viewer (or in fact, whether the viewer is looking at those web pages at all).

This problem is particularly exacerbated in immersive presentations, in which the viewer's participation in the presentation forms an important part of what is actually presented. In immersive presentations, the viewer's selection of what direction to look, how closely to look, how long to look, or what audio channels to listen for, are material to the nature of the data presented to the viewer.

Accordingly, it would be advantageous to provide a technique for view direction feedback in presentation imagery, such as used in conjunction with an internetworking environment, which allows a presentation server (or other device) to obtain feedback information from viewers regarding those portions of the presentation they are most interested in. Such information, obtained either from specific viewers, or from an aggregate or set of viewers, has wide applicability and generality for improving the function of the presentation, as described below.

### Summary of the Invention

The invention provides a method and system for view direction feedback from viewers to presenters. A presentation server and a presentation client cooperate to determine which portions of a presentation (such as an immersive or streaming presentation) to present to a viewer, in response to a set of (preferably time series) view direction information received from the viewer. The presentation client maintains the view direction feedback for use by the presentation server or by another device, so as to evaluate match between the presentation and the viewer. A record of view direction feedback, herein called a VDL (view direction log), allows the presentation server or presentation client to provide a set of general capabilities for improved presentation and improved measurement of the presentation.

A first set of applications includes e-commerce (electronic commerce), in which the presentation has the purpose of persuading the viewer to purchase goods or services, such as in an internetworking environment. In preferred embodiments, the VDL is used to determine relative product placement, relative effectiveness of advertisements, degree of viewer interest in selected products, and the like.

A second set of applications includes entertainment, in which the presentation has the purpose of entertaining the viewer or attracting or holding the viewer's attention. In preferred embodiments, the VDL information is used to modify media inputs for the presentation, to present a set of alternative presentations for selection by the viewer, to generate additional or altered presentations in response to viewer preferences (such as generating a non-immersive presentation in response to a VDL for an immersive presentation, or vice versa), and the like.

A third set of applications includes teaching, training, and evaluation, in which the presentation has the purpose of measuring a degree of match between the viewer's VDL information and a normative or desired set of VDL information. In preferred embodiments, the VDL information is used to determine if the viewer paid (adequate) attention to elements of the presentation deemed important by presenters.

A fourth set of applications includes monitoring, in which the presentation has a specific utilitarian purpose, such as requiring the viewer to process the information in the presentation, and in which the VDL information is used to measure whether the viewer is in fact (adequately) processing that information.

The invention provides an enabling technology for a wide variety of applications for using VDL information, so as to obtain substantial advantages and capabilities that are novel and non-obvious in view of the known art. Examples described below relate to immersive imagery, streaming imagery, and to view direction and zooming, but the invention is broadly applicable to many different types of presentation and to feedback thereto. The invention has general applicability to non-immersive audio-visual presentations, to generic presentations of data (such as database searches), and to biometric feedback other than view direction and zooming. The invention also has general applicability to both individual and aggregate measures of VDL information, including correlation between individual or aggregate measures and normative, purposive, or clustered VDL information feedback.

### Brief Description of the Drawings

Figure 1 shows a block diagram of a system for view direction feedback in immersive imagery.
Figure 2 shows a data flow diagram of the system view direction feedback in immersive imagery in operation.
Figure 3 shows a process flow diagram of a method for operating a system for view direction feedback in immersive imagery.
Figure 4 illustrates a networked computer systems arrangement used to distribute motion panoramic images captured by the panoramic camera system Figure 1 from a panoramic image server to client systems.
Figure 5A illustrates a conceptual view of a spherical view captured by the panoramic camera system of Figure 1.
Figure 5B illustrates a panoramic image frame in a spherical intermediate planar representation that has been unwrapped and divided into individual tiles.
Figure 5C illustrates a panoramic image frame in a cylindrical intermediate planar representation that has been divided into individual tiles or a spherical intermediate planar representation that has been adjusted and divided into tiles.
Figure 5D illustrates a panoramic image frame in a low-resolution intermediate planar representation that has been divided into individual tiles.
Figure 5E illustrates a panoramic image frame in a medium resolution intermediate planar representation that has been divided into individual tiles.
Figure 5F illustrates a panoramic image frame in a high-resolution intermediate planar representation that has been divided into individual tiles.
Figure 5G illustrates a panoramic annular image frame that has been divided into spatially variant tiles.
Figure 6A illustrates a view within a panoramic image frame in an intermediate planar representation.
Figure 6B illustrates four tiles from Figure 6A transmitted to construct a view within a client system.
Figure 7A illustrates a view within a panoramic image frame intermediate planar representation that has suddenly shifted by a large angular value.
Figure 7B illustrates a view within a panoramic image frame intermediate planar representation that has suddenly shifted by a small angular value.
Figure 8 illustrates a flow diagram that describes how a panoramic image client system negotiates a connection with a motion panoramic image server.
Figure 9 illustrates a flow diagram that describes how a motion panoramic image server sends image tiles to a panoramic image client.
Figure 10 illustrates a flow diagram that describes how a motion panoramic image client renders a panoramic image view using image tiles received from a server.
Figure 11 illustrates a panoramic image frame in an intermediate planar representation that has been divided into overlapping tiles.
Figure 12 illustrates a networked computer arrangement wherein a panoramic image server distributes motion panoramic image tiles on individual multicast channels.
Figure 13 illustrates a flow diagram that describes how a motion panoramic image client subscribes to multicast panoramic image tile channels and renders an image using received image tiles.
Figure 14 illustrates a panoramic annular image divided into quadrants that are served on different multicast channels.
Figure 15 illustrates a panoramic image server that transmits panoramic image information on different multicast channels on a multicast backbone, and client systems that subscribe to the multicast channels.

### Detailed Description of the Preferred Embodiment

In the following description, a preferred embodiment of the invention is described with regard to preferred process steps and data structures. Embodiments of the invention can be implemented using general purpose processors or special purpose processors operating under program control, or other circuits, adapted to particular process steps and data structures described herein. Implementation of the process steps and data structures described herein would not require undue experimentation or further invention.

### Related Applications

Inventions disclosed herein can be used in combination or conjunction with inventions disclosed in the following documents:
- U.S. Patent 5,796,426, issued 18 August 1998, in the name of inventors Eric Gullichsen and Susan Wyshynski, titled "Wide-Angle Image Dewarping Method and Apparatus."
- U.S. Patent Application Serial No. 09/131,186, filed 7 August 1998, in the name of inventors Edward C. Driscoll, Jr., and John Furlani (now John Furlan), titled "Method and Apparatus For Electronically Distributing Motion Panoramic Images." A summary of the relevant disclosure from this patent application is presented here in the section entitled *"Summary of U.S. Patent Application Serial No. 09/131,186."*
- European Patent Application No. 99309173.5, Publication No. 1004988 filed on 18 November 1999, in the name of Be Here Corporation, titled "Method, Apparatus, and Computer Program Product for Generating Perspective Corrected Data from Warped Information."

Each of these documents is hereby included by reference as if fully set forth herein. These documents are collectively referred to herein as the "Included Disclosures."

### Lexicography

The following terms refer or relate to aspects of the invention as described below. The descriptions of general meanings of these terms are not intended to be limiting, only illustrative.
- **view direction feedback** ― information obtained from one or more viewers regarding what portions of a presentation are of greatest interest or are actually paid attention to by those viewers
- **view direction log (VDL)** ― a collection of information regarding view direction feedback, including a selection of a time series sequence of view direction, zooming, audio channel information and other information requested by and presented to a viewer
   Although the description herein refers to the view direction log as a "log," that log includes an interactive sequence of information, including requests made by the viewer at the presentation client and responses made by the presentation server.
- **viewer** ― one or more recipients of a presentation
   For example, but without limitation, viewer(s) can include individuals, aggregates on individuals, or sets of individuals, whether demographically distinguished or otherwise.
   Although a preferred embodiment is described with regard to individual human beings as viewers, the invention is also applicable to other types of viewers these might include one or more of, or some combination of, the following:
   (a) artificial intelligence devices or programs;
   (b) signal processing devices or programs;
   (c) logically remote device control devices or programs;
   (d) telemetry devices or programs, and the like.
- **presenter** ― a source of information for presentation to viewers
- **presentation** ― a set of information to be presented (such as announced, displayed, played, sent or transmitted) to viewers.
   Although a preferred embodiment is described with regard to immersive imagery, the invention is also applicable to other types of presentation, such as (a) streaming non-immersive audio or visual information, (b) "still" audio or visual information, (c) textual or hypertextual information, such as web page contents or database records, (d) other information, such as sensors, telemetry, and the like, or (e) some combination thereof.
- **portions of a presentation** ― information used by a presentation client to present a selection of the presentation to viewers
- **matching between presentation and viewer** ― a measure of whether the viewer was attracted to, or paid attention to, selected portions of the presentation deemed relevant by the presenters
- **biometric feedback** ― information about the viewer relevant to the viewer's reaction to the presentation
   For example, but without limitation, biometric feedback can include hand or eye movement by the viewer, sound made by the viewer, heartbeat, blood pressure, breathing rate, eye dilation, or EEG or EKG measurements.
- **aggregate measures** ― information about an aggregation or set of viewers
   For example, but without limitation, aggregate measures can include one or more of, or some combination of, the following:
   (a) a median or modal response to a presentation;
   (b) a correlation between demographic information about viewers and their view direction feedback;
   (c) clustering information about sets of viewers indicating similarities or differences in reaction to the presentation; or
   (d) correlative measures between sets of viewers and a selected purpose of the presentation
- **client and server** ― these terms refer to a relationship between two devices, particularly to their relationship as client and server, not necessarily to any particular physical devices.
   For example, but without limitation, a particular client device in a first relationship with a first server device, can serve as a server device in a second relationship with a second client device. In a preferred embodiment, there are generally a relatively small number of server devices servicing a relatively larger number of client devices.
- **client device and server device** ― these terms refer to devices taking on the role of a client device or a server device in a client-server relationship (such as an HTTP web client and web server). There is no particular requirement that any client devices or server devices must be individual physical devices. They can each be a single device, a set of cooperating devices, a portion of a device, or some combination thereof.
   For example, but without limitation, the client device and the server device in a client-server relation can actually be the same physical device, with a first set of software elements serving to perform client functions and a second set of software elements serving to perform server functions.

As noted above, these descriptions of general meanings of these terms are not intended to be limiting, only illustrative. Other and further applications of the invention, including extensions of these terms and concepts, would be clear to those of ordinary skill in the art after perusing this application. These other and further applications are part of the scope and spirit of the invention, and would be clear to those of ordinary skill in the art, without further invention or undue experimentation.

### System Elements

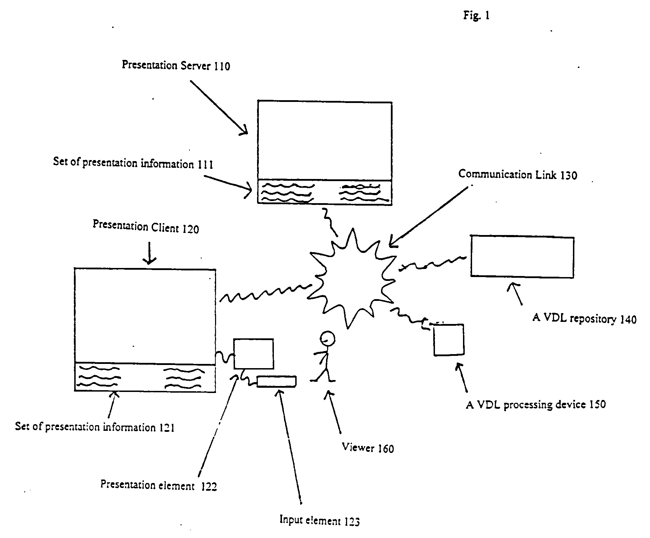

Figure 1 shows a block diagram of a system for view direction feedback in immersive imagery.

A system 100 includes a presentation server 110, a presentation client 120, a communication link 130, a VDL repository 140, and a VDL processing device 150.

The presentation server 110 includes a processor, program and data memory, mass storage, and a set of presentation information 111 for presentation to a viewer 160. In a preferred embodiment, the presentation information 111 is included in the program and data memory, in the mass storage, or in some combination thereof. The mass storage can include any device for storing relatively large amounts of information, such as magnetic disks or tapes, optical devices, magneto-optical devices, or other types of mass storage.

The presentation client 120, similarly to the presentation server 110, includes a processor, program and data memory, mass storage, a set of presentation information 121 for presentation to the viewer 160, a presentation element 122, an input element 123. Similarly to the presentation server 110, in a preferred embodiment, the presentation information 111 is included in the program and data memory, in the mass storage, or in some combination thereof. Although the presentation client 120 is described herein as separate from the presentation server 110, there is no particular requirement in any embodiment of the invention that these must be separate devices.

The communication link 130 includes any technique for sending information between the presentation server 110 and the presentation client 120. In a preferred embodiment, the communication link 130 includes a computer network, such as an Internet, intranet, extranet, or a virtual private network. In alternative embodiments, the communication link 130 can include a direct communication line, a switched network such as a telephone network, or some combination thereof.

The VDL repository 140 includes mass storage for recording the view direction log. The VDL repository 140 is coupled to the presentation server 110 and the presentation client 120. In a preferred embodiment, the VDL repository 140 is coupled to the communication link 130, so as to be accessible by both the presentation server 110 and the presentation client 120. Although the VDL repository 140 is described herein as separate from the presentation server 110, and the presentation client 120, there is no particular requirement in any embodiment of the invention that these must be separate devices.

The processing device 150, similarly to the presentation server 110, includes a processor, programming data memory, and mass storage. The processing device 150 operates under control of operating system and application software for processing the view direction log, as described the herein. Although the processing device 150 is described herein as separate from the presentation server 110, the presentation client 120, and the VDL repository 140, there is no particular requirement in any embodiment of the invention that these must be separate devices.

### System Operation

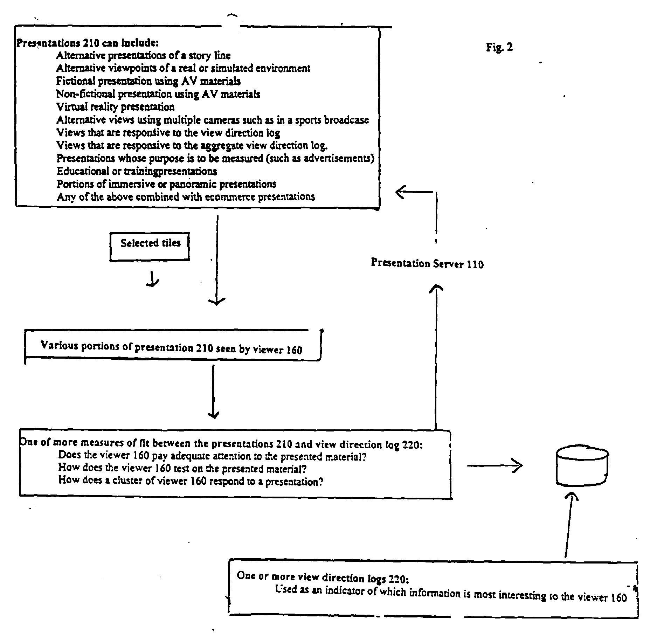

Figure 2 shows a data flow diagram of the system view direction feedback in immersive imagery in operation.

The data flow diagram shows opportunities for use of one or more of view direction logs in combination with one or more presentations, so as to produce feedback for either those making or producing the presentations, or those viewing the presentations.

A data flow diagram 200 shows one or more or presentations 210, and one or more view direction logs 220, being used for the generation of one or more measures 230 of fit between the presentations 210 and the view direction logs 220.

As described in the Included Disclosures, the presentation server 110 maintains the presentation information 111 for distribution to the presentation client 120, at the request of the latter. The presentation information 111 includes information for an entire immersive image, including both a set of low-resolution information and a set of high-resolution information. As described in the Included Disclosures, the presentation server 110 sends the entire low-resolution immersive image to the presentation client 120, and sends only selected tiles (or portions of tiles) of the high-resolution immersive image to the presentation client 120.

As described in the Included Disclosures, the selected tiles are chosen by the presentation client 120, in response to view direction information provided by the viewer 160. For example, if the viewer 160 desires to look to the left, the viewer 160 so indicates to the presentation client 120 using the input element 123, and the presentation client 120 will request the appropriate tiles from the presentation server 110.

In a preferred embodiment, the presentation client 120 records the view direction information provided by the viewer 160, thus generating a view direction log. (In alternative embodiments, the presentation server 110 can record the view direction information as supplied by the presentation client 120, and can generate a view direction log therefrom.) As noted above, the view direction log includes a time-series sequence of information relating to view direction, zooming, audio channel information and other information requested by and presented to the viewer 160. In a preferred embodiment, the view direction log includes information sufficient to reconstruct the viewport (as described in the Included Disclosures) presented moment by moment to the viewer 160 at the presentation client 120.

As noted above, although the description herein refers to the view direction log as a "log," there is no particular requirement that the view direction log must be a static collection of information that records only information from the presentation element 122 at the presentation client 120 or only information from the input element 123 at the presentation client 120. The view direction log can include interactive information, including time-sequence information about panning, zooming, other operation of cameras or other input devices, interactive modification of information at the presentation server 110, and other information regarding requests made by the viewer 160 at the presentation client 120 and responses made by the presentation server 110.

The presentation client 120 sends the view direction log (or at least portions thereof) to the VDL repository 140, using the communication link 130. The VDL repository 140 records the view direction log (or at least portions thereof) for later inspection, use, or modification by the presentation server 110, the presentation client 120, or the VDL processing device 150.

Applications of the system 100 include techniques in which the view direction log plays a role, including possibly (as noted above) e-commerce, entertainment, teaching or evaluation, and monitoring. However, there is no particular requirement that applications of the system 100 must be limited to these applications, or limited extensions thereof. The system 100 and the view direction log have wide applicability, as will be clear to those skilled in the art after perusal of this application.

### Selecting Presentations

In one use of the system 100, the one or more presentations 210 can include a number of alternative presentations, either designed for that purpose, or alternatively gleaned from one or more real-time data gathering devices.

For a first example, the one or more presentations 210 can include alternative presentations of a story line, or alternative viewpoints of a real or simulated environment. These could include a fictional presentation using audio-visual materials, or could include a real-world presentation using audio-visual materials, or could include a virtual reality presentation. One example of a virtual reality presentation might be a panoramic viewpoint of the interior of a building, such as a workplace, a factory, or a house for sale. In a preferred embodiment, the camera includes a panoramic camera using a catadioptric lens, as described in the Included Disclosures. Another example of a virtual reality presentation might be the presentation generated in response to a VRML document, or similar data structure, whose purpose is to allow the presentation of two-dimensional representations of a substantially three-dimensional environment (whether or not that three-dimensional environment is intended to be real, fantasy, or an artist's representation of a conceived or future possibility).

For a second example, the one or more presentations 210 can include alternative viewpoints or alternative mixtures of viewpoints, gathered from real-time data gathering devices. These could include multiple cameras, whether catadioptric, panoramic, or normal still or video cameras, positioned so as to obtain more than one viewpoint of a real-time or simulated environment. An example of a real-time environment might include a broadcast of a political, sporting, or other news event. In one preferred embodiment of this example, the viewer 160 might be given a selection of sports editors, from which the viewer 160 might choose to follow one such editor's choices of portions of the presentation to present.

The one or more alternative presentations 210 might be responsive to the view direction log, or to other inputs from the viewer 160. As noted with regard to alternative story lines, the viewer 160 might select one of the alternative story lines, or the presentation server 110 or the presentation client 120 might select one of the alternative story lines in response to the view direction log.

The one or more alternative presentations 210 might be responsive to an aggregate view direction log, such as a mean or median or modal set of view direction log choices. Thus, from a set of alternative presentations 210, the presenters would have the ability to choose that set of portions of those presentations 210 most engaging to viewers 160 in a selected population.

### Measuring and Altering Presentations

In a second use of the system 100, the one or more presentations 210 can include presentations whose purpose is to be measured, in response to the view direction log, for qualities the presenters desire.

For a first example, the one more presentations 210 might include presentations in which is desired that the viewer 160 notice certain aspects of the presentation. These aspects could include advertising, details of the interest to the presenters or desirable (to the presenters) for the viewer 160 to have seen. A first example of such a presentation could include a presentation in which advertisements are placed and it is desired to measure whether the viewer 160 pays attention to such advertisements. A second example of such a presentation could include a presentation in which products or services are placed for notice by the viewer 160, and it is desired to measure whether that viewer pays attention to such products or services. In these two examples, the presenters desire to measure whether or not the viewer 160 pays attention to the advertising or to the effectiveness of product placement.

For a second example, the one or more presentations 210 can include presentations in which it is desired for the presentation to educate the viewer 160. The presentation might be an explicit educational presentation, or might be a presentation when an educational theme or message. A first example of such a presentation could include an audio-visual or other presentation of a lecture or other educational experience, in which it is desired to determine whether or not the viewer 160 was paying attention to relevant aspects of the educational experience. A second example of such presentation could include a presentation of an experience or story in which there is an explicit message or theme, and in which it is desired to determine whether or not the viewer 160 successfully received the intended message (or moral) of the story.

These examples can be combined with the e-commerce or product placement examples, so as to determine what portions of a presentation, whether real or simulated, are most noticed by the viewer 160.

Similarly, the presenters would have the ability to alter a presentation 210 in response to either a single, or an aggregate, view direction log, so as to optimize that presentation 210 for presentation to one or more viewers 160 from a selected population.

For a first example, where the presentation 210 is in response to a set of real-time events, the presenters would have the ability to alter the presentation 210 so as to present that portion of those real-time events that are of greatest interest to the selected population. In this first example, an aggregate view direction log would provide the presenters with sufficient information to determine a selection of events that a majority of the selected population is interested in.

For a second example, the presentation 210 can be distributed by the server device with varying degrees of compression, where those degrees of compression are in response to that the view direction log, whether for an individual viewer or for a plurality of viewers. In this second example, an aggregate view direction log would provide the presenters with sufficient information to determine a primary degree of compression for broadcast or multicast output. Similarly, an individual's view direction log would provide the presenters with sufficient information to determine a degree of compression for sending the presentation two that particular individual viewer.

For a third example, the presentation 210 can be produced in response to a plurality of cameras or other receiving devices, whether those cameras are catadioptric, otherwise immersive receiving devices, or otherwise non-immersive receiving devices. In this third example, an aggregate view direction log would provide presenters with sufficient information to determine operating parameters for those cameras or other receiving devices. These operating parameters could include orientation, position, focal length, transmission bandwidth, compression value, depth of visual field, resolution (such as audio resolution, video resolution, or degree of color resolution).

In a particular embodiment of this third example, an aggregate view direction log would provide presenters with sufficient information to determine whether or not to move selected individual cameras; whether or not to select individual cameras for primary presentation; and whether or not to pan, zoom, filter, or otherwise alter the output from those cameras.

In another particular embodiment of this third example, an aggregate view direction log would provide presenters with sufficient information to determine whether or not to move selected telemetry devices, or how to combine information from of plurality of telemetry devices placed so as to be responsive to a real-time set of events. These telemetry devices could include micro-telemetry devices (such as for medical uses), or could include long distance telemetry devices (such as for geographic or seismic uses).

### Creating New Presentations

In a third use of the system 100, the one or more presentations 210 can include presentations whose purpose is to be transformed, or to be a source for new presentations having qualities the presenters desire, in response to the view direction log.

For a first example, the one or more presentations 210 can include at least portions of immersive or panoramic presentations 210, from which it is desired to generate at least portions of non-immersive or otherwise standard audio-visual presentations 210. Thus, the immersive or panoramic presentations 210 could include information gleaned from a collection of cameras, from a panoramic camera, or from a virtual reality system. The view direction log could be used as an indicator of which portions of those presentations 210 are most interesting to the viewer 160. Using this information, the presenters can determine a non-immersive audio-visual presentation, or an animated presentation, which is most likely to present those aspects of the panoramic presentation 210 of interest to the viewer 160.

For a second example, the one or more presentations 210 can include at least portions of ordinary audio-visual presentations, still photographs, animation, and texture or other graphical information. The view direction log could be used as an indicator of which information is most interesting to the viewer 160. Similarly, in using this information, the presenters can determine an immersive presentation 210, or a virtual reality simulation giving rise to an immersive presentation 210, which is most likely to present those aspects of the data that are of interest to the viewer 160.

Similarly to the e-commerce applications and presentation measurement applications noted above, these techniques can be used in combination with alternative presentations of a story line, with alternative viewpoints of a presentation 210, with measurement of placement of actors, clues, plot points, or products, or other aspects of the presentation 210.

Similarly to the e-commerce applications and presentation measurement applications noted above, these techniques can be used in combination with an aggregate view direction log, such as a mean or median or modal set of view direction log choices. Thus, the presenters would have the ability to create new presentations 210 in response to a set of preferences of one or a set of viewers 160 in a selected population.

### Measuring Individual Viewers

In a fourth use of the system 100, the view direction log can be used to determine whether or not one or more viewers 160 were paying attention to those portions of the presentation 210 deemed important by the presenters.

For a first example, the presentation 210 might include a training presentation 210 or a simulation presentation. In the case of a training presentation 210, the information would be presented to the viewer 160 with the purpose of teaching the viewer 160 new material. When teaching the viewer 160 new material, the view direction log could be examined to determine if the viewer 160 paid adequate attention to the new material. In the case of a testing presentation 210, the information would be presented to the viewer 160 with the purpose of testing the viewer 160 on already presented material. When testing the viewer 160 on already presented material, the view direction log could be examined to determine if the viewer 160 paid adequate attention to portions of the material deemed important by the presenters.

An exemplary case of such a training presentation 210 might include a medical or surgical presentation, in which the viewer 160 is a medical student and the purpose of the presentation 210 is to show the medical student an example of a surgical procedure in progress. An exemplary case of such a testing presentation 210 might include the same presentation 210 and the same viewer 160, where the purpose of the presentation 210 is to determine if the medical student pays adequate attention to elements of the surgical procedure in progress. For example, it would be valuable to determine if the medical student is watching proper medical instruments, is watching proper anatomical elements of the patient, or is instead watching some other non-essential elements of the presentation 210.

For a second example, the presentation 210 might include an immersive presentation 210 of a real or simulated environment. In this second example, the purpose of the presentation 210 would be to determine whether or not the viewer 160 is applying attention and prior training to elements of the real or simulated environment.

An exemplary case of such an immersive presentation 210 might include a security presentation, in which the viewer 160 is a policeman or security guard. The purpose of the presentation 210 might be to determine whether or not the security guard has adequately inspected all elements of the presentation deemed important by the presenters. For example, the presenters might deem it important that the security guard examine every door to determine if it is unlocked and every window to determine if that is in fact closed.

In this particular exemplary case, it is envisioned that a security guard could be located remotely from the location actually to be reviewed. The security guard would thus be able to review portions of the building periodically, by using catadioptric, panoramic, or other video cameras, when the signal from those cameras being sent from the building under review to a possibly-remote location at which security guards are stationed. For example, and without limitation, security guards could be stationed at a location several time zones away from the building and review; thus, it would be daytime for the security guards when it was nighttime for the building under review. In addition to the ability of the security guards to review any portion of the building, at will, without moving about the building physically, it would also be possible to determine if the security guards were actually looking at all relevant locations within the building under review.

### Clustering Viewers

In effect the use of the system 100, the view direction log can be used to obtain information about a population of viewers 160, and to determine clusters of those viewers 160 in response to their respective view direction logs. These clusters might also be determined in response to demographic information about those viewers 160, such as their age, sex, residence, profession, or annual income.

This clustering information might be combined with other measurement information described above so as to determine whether any selected presentation 210 appeals more or less to selected populations of viewers 160. For example, it may be found that a particular presentation 210 is much more appealing to teenage females than it is to male engineers in their mid 30's and 40's. This information has clear economic value in determining which products or advertisements to associate with the presentation 210.

This clustering information might also be used to determine whether or not an individual viewer 160, or a small selected population of viewers 160, fall within a normative range, as determined by the presenters. For example, it might be that selected violent scenes, or selected scenes including graphic sex or other psychological "hot buttons" are responded to in a particular way by so-called "normal" members of society. If an individual viewer 160, or a small selected population of viewers 160, fall substantially outside those normative ranges, the presenters can thus make psychological conclusions about those viewers 160.

One exemplary circumstance in which this clustering information could be used is in the re-enactment of presentations 210 of crime scenes for viewers 160 who were, or might have been, witnesses thereto. Responses of the viewer 160, as indicated by the view direction log, to the presentation 210 of the crime scene, can be evidentiary as to the role the viewer 160 played in the actual (or possible) depicted events described by the presentation 210.

### System Applications

E-commerce applications of the system 100 include:
- Constructing a presentation intended to interest the viewer 160 in a product or service. The presentation can include a commercial (such as a television commercial or a promotional video), an advertisement (such as a billboard, booklet, or magazine page), or an animated advertisement (such as a banner advertisement on a web page).
   or
- Constructing a presentation intended to determine what is of interest to the viewer 160 in the presentation. The presentation can include a simulated environment (such as an immersive presentation of a store, or a virtual reality), in which advertisements or representations of products are placed. The presentation can also include a simulated environment in which it is desired to determine what portions of the simulated environment are most interesting to the viewer 160.

Entertainment applications of the system 100 include:
- Constructing a presentation intended to entertain the viewer 160. The view direction log can be used to determine which portions of the presentation the viewer 160 has the most interest in. This information can be used to determine which portions of a real-time event should be focused upon, either by immersive presentation equipment or non-immersive presentation equipment. For example, a presentation of a real time event such as a sporting event could use active feedback from one or more viewers 160 to determine which portions of that sporting event should be broadcast for general distribution.
- Similarly, the viewer 160 can select one of several presentations or variations of a presentation, in response to whether those presentations are selected by someone whose interests or taste and viewer 160 is in alignment with. For example, a viewer 160 can view that portion of a presentation of sporting event that corresponds to the portion selected by a preferred expert or commentator on that event.
- Similarly, preferences expressed by the viewer 160, as represented in the view direction log, can be used to determine which portions of a presentation should be selected for transfer to another type of presentation. For example, if a presentation is constructed using an immersive technology, the preferences of viewers as represented in an aggregate of the direction logs can be used to determine a non-immersive presentation of the same or similar things.
   or
- Similarly, preferences expressed by the viewer 160, as represented in the view direction log can be used to determine whether cameras should be moved, so as to present different portions of a real-time event that might be of greater interest to the viewer 160. For example, the cameras that could be moved would either use immersive techniques or non-immersive techniques.

Teaching or evaluation applications of the system 100 include:
- Constructing a presentation including a set of view direction log information that is preferred by the teacher or expert on the topic of the presentation. For example, a presentation on flying an airplane would include the opportunity for the viewer 160 to focus on particular areas of the sky or instruments within the airplane. Similar to other presentations, the presentation could use either immersive techniques or non-immersive techniques. The view direction log created by the viewer 160 could be matched against a preferred view direction log, or could be graded by the teacher or expert to determine how well the viewer 160 was able to carry out the skills involved in the presentation. Presentations of this nature could be created for a wide variety of skills, including police work, medicine or surgery, or other scales requiring the attention of the viewer 162 particular aspects of the scene or environment.
   or
- Similarly, the presentation might not involve particular skills, but the viewer 160 (and the resulting view direction log) could be evaluated or graded against normative or preferred degrees of attention paid by the viewer 162 portions of the presentation. For example, the presentation could be intended to evoke an emotional or other response, and the direction log would be examined to determine if the emotional or other response (as actually elicited from the viewer 160) was within normal parameters.

Monitoring applications of the system 100 could include:
- The presentation might involve a real-time event or series of events, such as might be seen by a participant or spectator at a remote location. The preferences of the viewer 160, the and the resulting view direction log, could be examined to determine whether the viewer 160 paid attention (or adequate attention) to particular elements of the presentation. For example, the presentation might involve an immersive or non-immersive presentation of a remote facility, in which it is important for the viewer 160 to actually inspect all portions (or certain selected portions) of that facility, such as checking for open doors, checking for open windows, and the like.

### Method of Operation

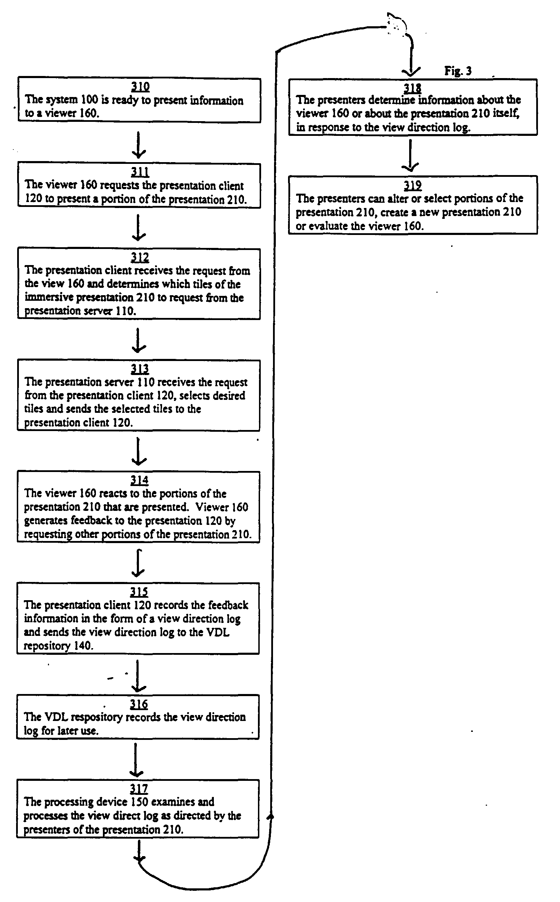

Figure 3 shows a process flow diagram of a method for operating a system for view direction feedback in immersive imagery.

A method 300 is performed by the system 100. Although the method 300 is described serially, the steps of the method 300 can be performed by separate elements in conjunction or in parallel, whether asynchronously, in a pipelined manner, or otherwise. There is no particular requirement that the method 300 be performed in the same order in which this description lists the steps, except where so indicated.

At a flow point 310, the system 100 is ready to present information to a viewer 160.

At a step 311, the viewer 160 requests the presentation client 120 to present a portion of the presentation 210.

At a step 312, the presentation client 120 receives the request from the viewer 160, and determines which tiles of the immersive presentation 210 to request from the presentation server 110.

At a step 313, the presentation server 110 receives the request from the presentation client 120, selects the desired tiles from the presentation 210, and sends those tiles (in a compressed form) to the presentation client 120, for presentation to the viewer 160. In a preferred embodiment, these tiles are recorded at the presentation server 110 in an already-compressed form, so that sending the desired tiles in a compressed form does not take any extra time for compression.

At a step 314, the viewer 160 of reacts to the portions of the presentation 210 that are presented, and generates feedback to the presentation client 120 requesting other and further portions of the presentation 210.

At a step 315, the presentation client 120 records the feedback information in the form of the view direction log, and sends the view direction log to the VDL repository 140. In a preferred embodiment, the presentation client 120 also sends that information to the presentation server 110, so the presentation server 110 can be prepared to deliver selected tiles to the presentation client 120 upon request.

At a step 316, the VDL repository 140 records the view direction log for later use.

At a step 317, the processing device 150 examines the view direction log, and engages in for the processing of the view direction log as directed by the presenters of the presentation 210.

At a step 318, the presenters of the presentation 210 determine information about the viewer 160, or information about the presentation 210 itself, in response to the view direction log.

At a step 319, the presenters can alter or select portions of the presentation 210, or can create a new presentation 210, or can evaluate the viewer 160, in response to the view direction log, as described above.

The method 300, including the steps associated with the flow point 310, can be performed a single time, work can be repeated periodically or continually, as appropriate to the application chosen by the presenters.

### Summary of U.S. Patent Application Serial No. 09/131,186

The following is a summary of U.S. Patent Application Serial No. 09/131,186, filed August 7, 1998, in the name of inventors Edward C. Driscoll, Jr., and John Furlani (now John Furlan), titled "Method and Apparatus For Electronically Distributing Motion Panoramic Images" that was included by reference in the US Patent application for which priority is claimed.

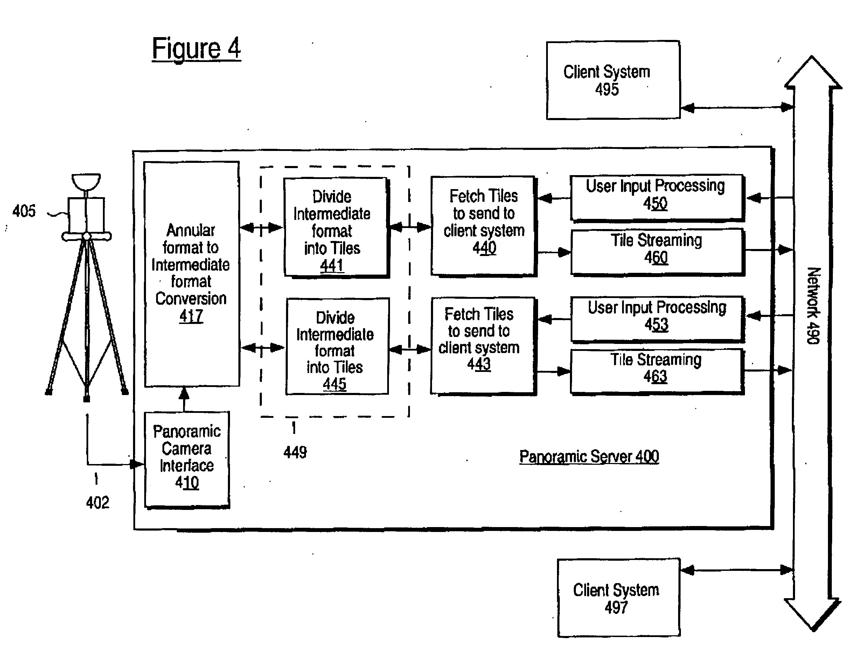

Referring to Figure 4, a panoramic camera system 405 captures a series of panoramic annular image frames with an electronic image capture mechanism. The panoramic annular image frames are transmitted from panoramic camera system 405 to a panoramic image server 400 across a high bandwidth communication link 402. The communication link must be high bandwidth since each panoramic annular image frame contains a very large amount of information and, to provide a flicker-free motion image, several panoramic images must be transmitted each second.

Alternate embodiments of motion panoramic image capture systems can also be used. For example, a motion panoramic capture system may be created with two motion picture camera systems pointing in opposite directions wherein each motion picture camera system is equipped with a fisheye lens that captures at least a 180 degree hemispherical field of view. In such a panoramic image system, two distorted fisheye images from each hemispherical view would need to be "stitched" together to create a single panoramic image.

### A First Motion Panoramic Image Distribution System Embodiment

As previously set forth, the full panoramic annular image frames generated by the panoramic camera system (such as panoramic camera system 405 of Figure 4) are so large that a very high bandwidth link is needed to transmit full motion images to a recipient. Such high bandwidth links are rare and expensive. Thus, for mass distribution of panoramic imagery, more bandwidth efficient methods of distributing panoramic images are needed.

The present invention introduces two different methods of distributing motion panoramic images. A first method divides panoramic images into tiles and transmits only the tiles needed to construct a desired image. A second method, described in a later section, divides panoramic images into individual tiles and then transmits all the tiles on different multicast channels.

### The Selective Tile Transmission System

To efficiently transmit a panoramic image, the present invention first proposes a selective tile transmission system. In the selective tile transmission system, a server computer system divides each panoramic frame into tiles. The tile size and shape are preferably selected in such a manner that is dependent upon a coordinate system used by the format used to transmit the tiles. Then, the tiles needed to construct an image on a client computer system are transmitted from the server system to individual clients.

In a preferred embodiment, the server system transforms each incoming panoramic image frame into an intermediate planar representation. This transformation step is not necessary but provides certain advantages. The selective tile transmission system will be described with reference to a system that performs this transformation in Figures 4, 5, 6, 7, 8 and 9.

Referring to the particular embodiment of the selective transmission system illustrated in Figure 4, a panoramic annular image transformation system 417 "unwraps" annular panoramic image frames into an intermediate planar representation. The intermediate planar representation is more convenient for generating images suitable for viewing. Specifically, the intermediate format should require fewer calculations to generate a final rectangular projection.

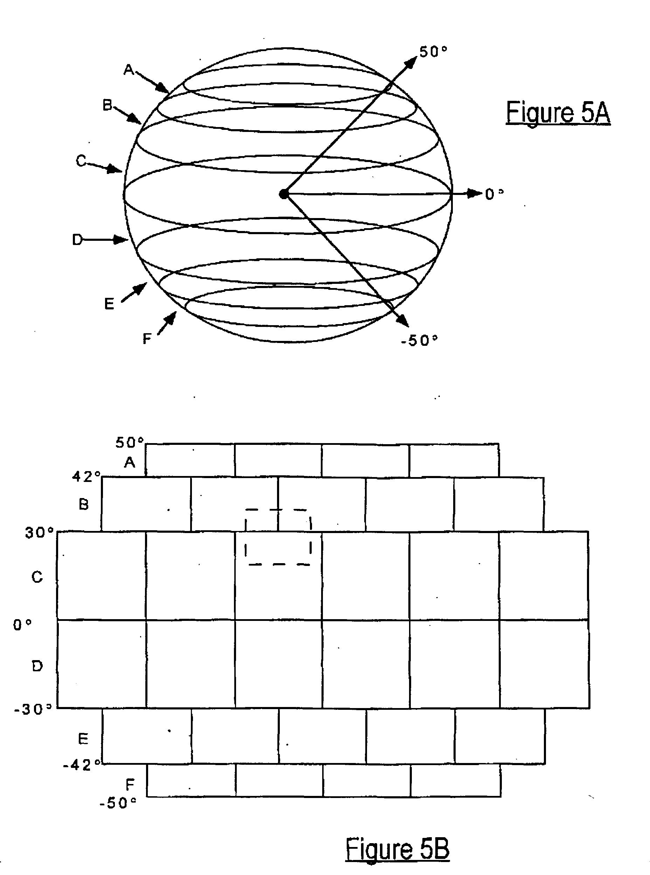

In one embodiment, the incoming annular panoramic image data is geometrically transformed into a spherical coordinate system with a spherical projection representation. In such an embodiment, a single frame of the image data may be viewed with the Live Picture viewer from Live Picture, Inc. Figure 5A conceptually illustrates a spherical data format wherein the view of the surroundings is projected onto a sphere surrounding a viewpoint.

In another embodiment, the incoming annular panoramic image data is geometrically transformed into a cylindrical coordinate system in a cylindrical projection representation. An image transformed into a cylindrical coordinate system may be viewed with the QuickTime VR viewer created by Apple Computer, Inc.

After converting the panoramic image frames into an intermediate planar representation, the system of the present invention divides the intermediate planar representation into individual tiles. In the present invention, the size of the tiles are dependent upon the coordinate system of the intermediate planar representation. In such embodiments, the tiles may be spatially variant.

The size of the tiles may further be dependent upon the client system that will be displaying the panoramic image data. In such an embodiment, each client uses a different process (441 or 445) to divide intermediate planar representations into tiles since each client may use different client sizes. However, in a standardized embodiment, the size of the tiles are fixed such that a single process (illustrated as dotted box 449) may be used to divide an intermediate planar representation into individual tiles.

Figure 5A illustrates a conceptual diagram of the spherically encoded intermediate planar representation. As illustrated in Figure 5A, the spherically encoded intermediate planar representation represents the surrounding world as image data mapped onto a sphere. To divide and organize the data, the sphere is broken into individual bands on sphere A, B, C, D, E, and F. Note that the bands near the "equator" of the spherically encoded intermediate planar representation contain more data than the bands closer to the "poles."

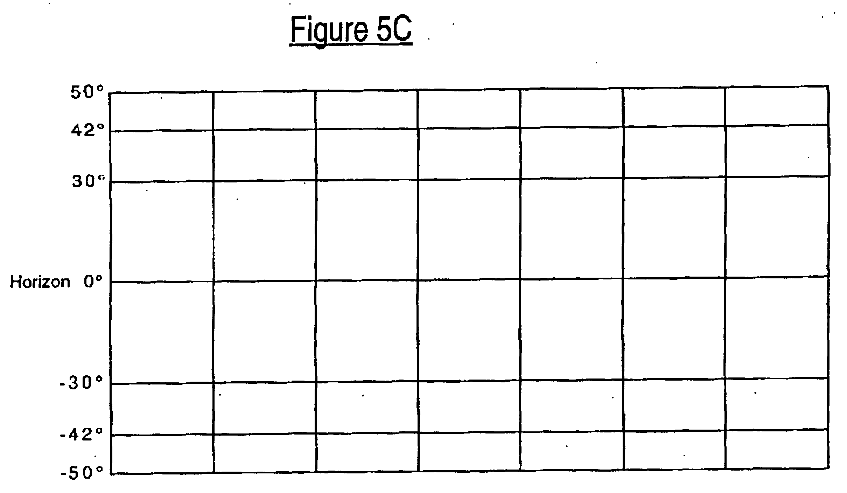

In one embodiment of the present invention, the image data is represented by individual bands that are divided into individual tiles as illustrated in Figure 5B. Note that there will be fewer tiles in the bands from higher inclination angles. Alternatively, there will be the same number of tiles, but the tiles will contain data from smaller yaw angles. If the data from the smaller yaw angles is increased, this type of intermediate data format can be graphically illustrated as shown in Figure 5C. Note that the graphical data representation of Figure 5C also matches the cylindrical data format of Figure 3. Although the data format of Figure 5B may be used and provides certain advantages (such as a more compact data format) this document will focus on the format of Figure 5C to simplify the description.

Referring to the particular embodiment of Figures 5A, 5B, and 5C, a first row of tiles covers from the horizon line to thirty degrees above the horizon. A second row of tiles covers from thirty degrees above the horizon to forty-two degrees above the horizon. A third, top, row of tiles covers the band from forty-two degrees above the horizon to fifty degrees above the horizon. The same angular divisions are used to divide the space below the horizon. The row size divisions are nonlinear and widest at the horizon since users are usually most interested in views near the horizon. However, different angular divisions, such as linear angular divisions, may also be used.

After dividing each unwrapped panoramic image into tiles, a tile fetching program (440 and 443) fetches tiles for transmission to the client system. Ideally, the tile-fetching program only selects the tiles needed to create a view on a client computer system. In a preferred embodiment, the client computer system determines which tiles are needed and sends a request that specifies these tiles. The fetched tiles are transmitted using a tile-streaming program (460 and 463). By transmitting only the tiles needed to create a view on the client computer system, the system of the present invention limits the amount of information that must be transmitted from a panoramic image source server to a panoramic image client display.

### Tile Tiering for Magnification

To accommodate several different magnification levels, several different sets of tile resolution may be created. For example, a low resolution "zoomed back" initial set of tiles may be used for panning around a panoramic image. The low-resolution initial tiles would encompass a large angular view. When an interesting area of the panoramic image is selected, a higher resolution set of tiles could then be selected.

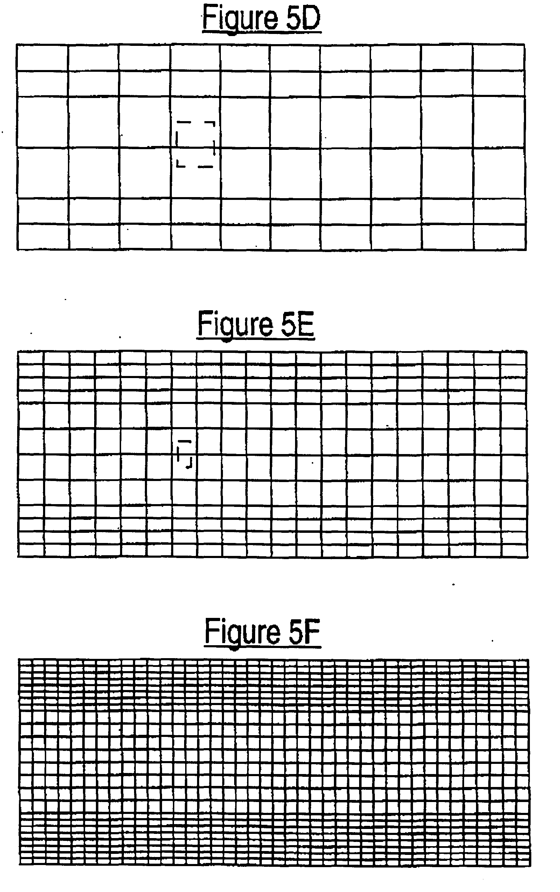

Figures 5D, 5E and 5F illustrate one possible embodiment where a panoramic image space has been divided into three tiers of magnification. An initial "zoomed back" tile magnification intermediate planar representation is presented in Figure 5D. The lower resolution intermediate planar representation of Figure 5D is used first. When a user wishes to see a portion of a view in greater detail, the client software "zooms in" by fetching tiles from the next higher resolution intermediate planar representation displayed in Figure 5E. If even greater resolution is needed, the client software "zooms in" further by fetching tiles from Figure 5F. In one embodiment, the pixel resolution of the individual tiles of Figures 5D, 5E and 5F is the same such that the individual tiles take up the same amount of screen space but provide successively greater resolution.

### Tiling without Transformation

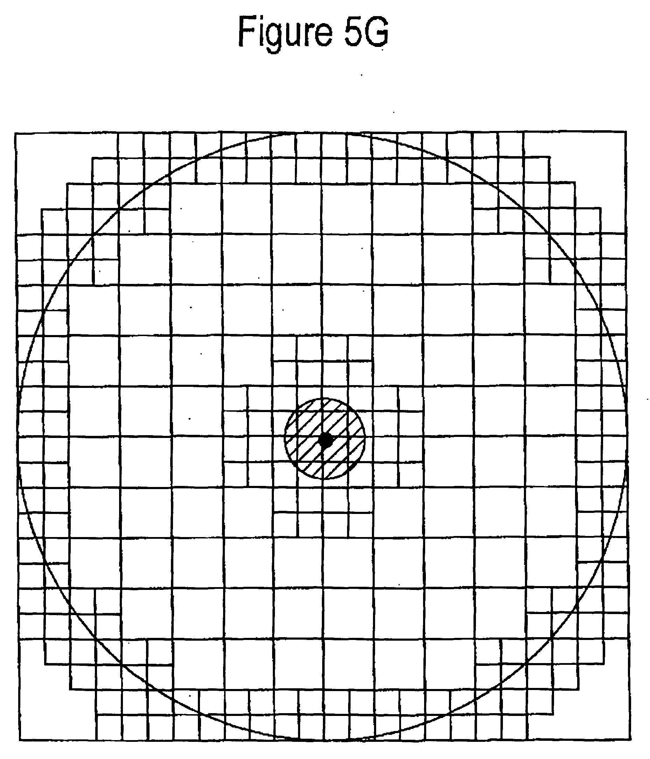

The initial panoramic image frames need not be transformed into an intermediate planar representation before division into individual tiles. The intermediate planar representation transformation is usually performed since the transformation is used to put the image into a format that can be used to quickly generate an image for display with minimal processing. However, the raw panoramic image frames may immediately be divided into tiles and transmitted. For example, Figure 5G illustrates a raw panoramic annular image frame from the panoramic camera system of Figure 1. Before transmitting, the raw panoramic annular image is divided into tiles. In the embodiment of Figure 5G, the raw panoramic annular image is divided into square tiles that are small near the center since a small tile covers a wide image area in the annular format.

The middle part of the annular disk is divided into larger tiles. The outside of the annular disk is divided into smaller tiles since a narrow strip of tiles is needed when constructing a view that uses information from the edge of the annular disk. Thus, the tiles are spatially variant.

### Tile Positional Selection

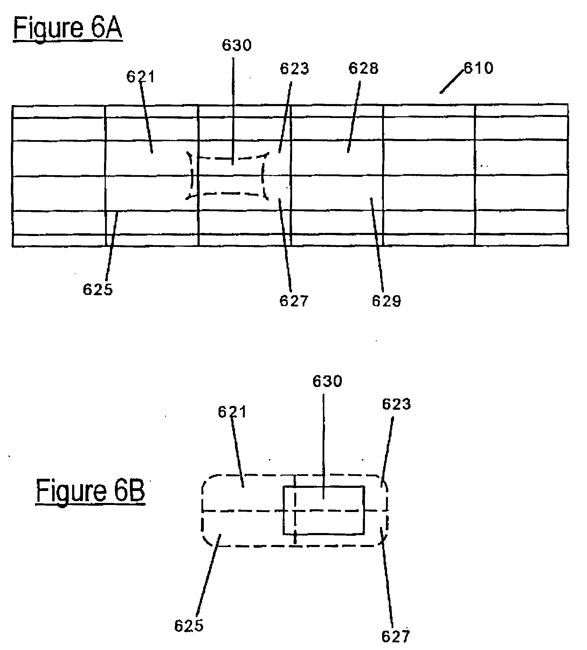

Figure 6A illustrates an example of a client system view into a panoramic image. Specifically, client view 630 represents a view into an unwrapped panoramic image 610 requested by a client computer system. The view is distorted since the view is illustrated within the spherical coordinate space. To construct the view 630 at a client system, a server (such as server 400) transmits tiles 621, 623, 625, and 627. Each tile 621, 623, 625, and 627 is compressed before transmission to further reduce the amount of information that needs to be transmitted. Figure 6B illustrates how the four tiles 621, 623, 625, and 627 from the server are used to construct the client view 630 on a client computer system. (The four tiles 621, 623, 625, and 627 appear distorted since the tiles are displayed in the rectangular projection coordinate space of Figure 6B.)

Referring back to Figure 6A, if a user moves the view 630 further to the right, then the view will cease to need tiles 621 and 623 and will instead begin to need tiles 628 and 629. To accommodate for such situations, the client system begins requesting tiles that are just slightly out of a current view when a view nears the edge of a tile in case the user moves further in that direction. Thus, in the example of Figure 6A, the client system would begin requesting tiles 628 and 629 when the view shifts a little further to the right. Thus, the tile-fetching program in the server would fetch and transmit tiles 628 and 629 to the client system. Then, if the client view 630 progresses even further to the right, tiles 623, 628, 627, and 629 would be used to construct the shifted client view in the client system.

In a preferred embodiment, the client computer system is responsible for determining when the out of view tiles are needed and when they should be transmitted. The client system makes this determination by examining factors such as how fast the user is moving the view, the latency of the connection with the server, and the parameters that define the view. The client computer system transmits a list of desired tiles to the server wherein the list of desired tiles define which tiles should be transmitted by the server to the client computer system.

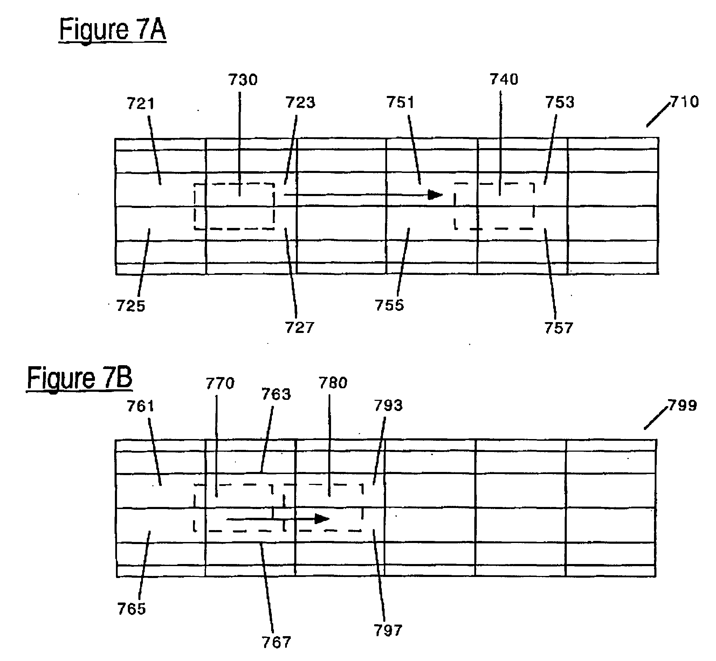

The movement anticipation procedure described in the previous two paragraphs works well for small incremental client view shifts (which most view changes comprise). However, if a user makes a sudden quick view change, the needed tiles will not be available. For example, referring to Figure 7A, a user may quickly shift a view from a first view position 730 to a second view position 740. The first view position 730 was being rendered with tiles 721, 723, 725, and 727 that were sent by a server. The new second view position 740 requires tiles 751, 753, 755, and 757 that were not being transmitted.

To handle such sudden view changes, the present invention occasionally transmits a highly compressed version of the full panoramic image intermediate planar representation. The highly compressed panoramic image intermediate planar representation is only transmitted once every 30 or so normal frames. When a fast movement occurs, the client renders a view from the most recently received highly compressed panoramic image intermediate planar representation. This newly rendered view will not be in the normal resolution since it is being rendered from the highly compressed panoramic image intermediate planar representation. Simultaneously, the server will begin transmitting the tiles needed at the new view location.

In the example of Figure 7A, the server will begin transmitting tiles 751, 753, 755, and 757. When tiles 751, 753, 755, and 757 are received by the client computer system, the image rendered from the most recently received highly compressed panoramic image intermediate planar representation will be replaced with an image rendered from tiles 751, 753, 755, and 757. Thus, the new view image will become clearer once the server "catches up" to the users sudden view change.

A sudden movement may not move the view completely away from the currently available tiles. For example, a movement may place the view partially on tiles that are available and partially on tiles that are not available. In such a situation, the portion of the view that is located on available tiles can be rendered at the resolution of those tiles and the remainder of the view will be rendered using the highly compressed version. Similarly, if the user is "zoomed in" on high resolution tiles and the user moves quickly away from the currently available high resolution tiles, the view may be constructed using the tile from the next lower resolution tier if that tile is still available.

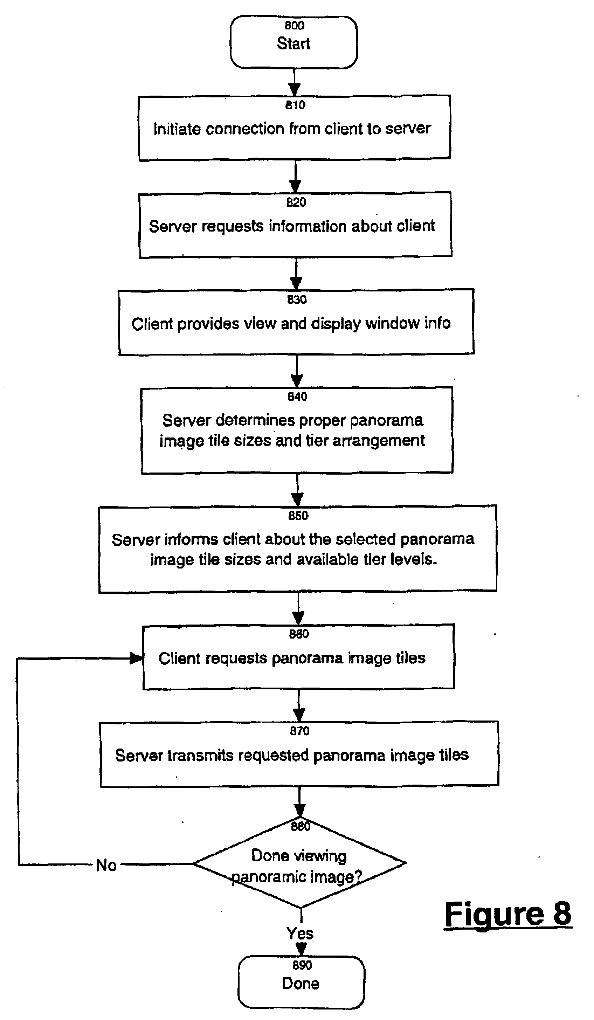

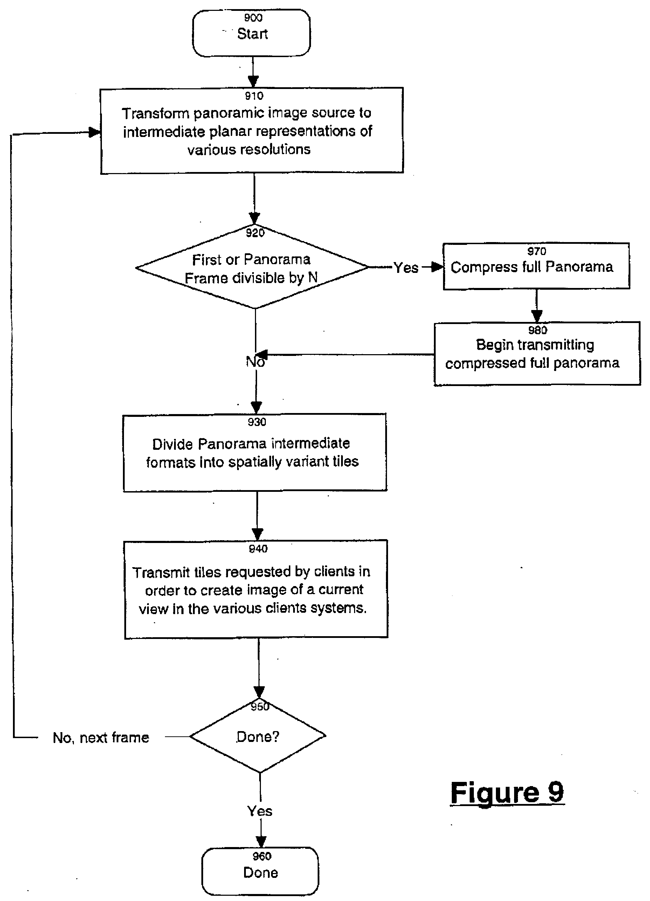

Figures 8 and 9 provide detailed flow diagrams that fully describe how the electronic image distribution system of Figure 4 operates. Figure 8 illustrates a flowchart describing one embodiment wherein a panoramic motion image server system and client system negotiate a connection. However, it should be noted that in other embodiments, a standard connection can be used such that there is no negotiation of connection parameters. Figure 9 describes how a server system transmits image tiles to a client system.

### Client-Server Motion Panoramic Image Connection Negotiation

Figure 4 illustrates one embodiment of a motion panoramic image client-server system wherein the bandwidth is conserved by dividing panoramic images into tiles. It should be noted that there is often not a "standard" server and client environment. Specifically, the clients, the server, and the network in a client-server environment may all vary depending on the circumstances. The capabilities of each different panoramic server system and each different panoramic client system would vary depending upon the system's specifications including the computer make, the processor type, the processor generation, the amount of random access memory available, the bus speed, and the operating system.

To most efficiently distribute motion panoramic images from a motion panoramic image server to clients, the present invention has a client-server negotiation. The server system determines the characteristics of the client before determining how the client-server system will operate. Figure 8 illustrates a flow diagram describing the method of negotiating the client-server motion panoramic image connection.

Referring to Figure 8, a client initiates a connection to a panoramic image server at step 810. Next at step 820, the panoramic image server requests information that describes the display characteristics of the client. Specifically, the server may request the client's frame buffer size, the client's frame buffer color characteristics, the size of the panoramic image view window, and other information relevant to the display of images on the client system. The motion panoramic image server may also request information describing the processing abilities of the client. For example, the panoramic image server may request the processor type, the processor speed, and the amount of main memory available. The client responds to the server's by sending this information to the motion panoramic image server at step 830.

At step 840, the motion panoramic image server uses the collected information to determine how the server will serve the client. One specific parameter that the server must decide is how to divide the unwrapped panoramic intermediate planar representation into tiles. Specifically, the size of the individual tiles will be determined. The motion panoramic image server may also determine the video frame-rate, a type of compression to use, and a processing-task division based upon the network connection speed and quality, the capabilities of the client system, and the current and anticipated processing load of the image server.

After determining the parameters of the motion panoramic image connection, the motion panoramic image server transmits the connection parameters to the client system at step 850. The client system will use the parameters to determine how the client system will display motion panoramic images. After the client and server have negotiated the motion panoramic image connection, the client begins requesting motion panoramic image information from the server system at step 860. In response to the requests, the server begins transmitting motion panoramic image tiles to the client system at step 870. Since the connection to each client is uniquely calibrated, the server will transmit panoramic image information to each different client in a manner that is specific to that particular client. The server will continue transmitting motion panoramic images until the client requests the server to stop sending images at step 880.

### Motion Panoramic Image Server Operation

Figure 9 describes how the motion panoramic image server transmits the information needed to construct a view within a motion panoramic image on a client system. Thus, Figure 9 describes in detail what occurs during the steps 860 and 870 of Figure 8.

Referring to step 910 of Figure 9, the first step that the motion panoramic image server must perform is transforming a panoramic image frame into one or more intermediate planar representations. The exact method of transforming a panoramic image frame is dependent on the type of camera system used. For example, a system built using the panoramic camera system of Figure 1 would perform a geometric transformation to transform the annular panoramic image frame into the selected intermediate planar representation. If a fisheye lens panoramic camera system were used, a different geometric transformation would transform the distorted fisheye image into the desired intermediate planar representation.

All subsequent actions are performed on the transformed intermediate planar representation. In an embodiment with magnification, the source panoramic image data is transformed into more than one intermediate planar representations of different resolutions. For example, the source panoramic image data can be transformed into low, medium, and high-resolution intermediate planar representations as illustrated in Figures 5D, 5E and 5F.

After the panoramic image frame has been transformed into an intermediate planar representation, the method proceeds to step 920. At step 920, the method determines if a highly compressed version of the full panoramic image frame should be transmitted. As previously set forth, a highly compressed version of the full panoramic image frame is transmitted occasionally to handle sudden movements of the client's view. In one embodiment, the motion panoramic image server transmits a highly compressed version of the full panoramic image frame during first and every Nth subsequent frame. Thus, during the first and every Nth subsequent frame, the method proceeds to step 970 where the full panoramic image frame is compressed. Then, at step 980, the motion panoramic image server begins transmitting the highly compressed version of the full panoramic image frame. The transmission of the highly compressed version of the full panoramic image frame may occur all at once. Alternatively, the highly compressed version of the full panoramic image frame may be transmitted concurrently along with individual image tiles such that individual image tiles are not delayed.

Next, at step 930, the one or more intermediate planar representation frames are divided into individual tiles as illustrated in Figures 5D, 5E and 5F. The size of the individual tiles is the size that was negotiated during the connection process described in the flow diagram of Figure 8.

After the frame has been divided into individual tiles, the server then fetches and transmits the tiles needed to create the client's view at step 940. Each tile is compressed before transmission to conserve bandwidth and decrease latency. The client will use the transmitted tiles to construct an image.

At step 950, the server method determines if the client system is done viewing the motion panoramic image. If the client is not done, the method proceeds back to step 960.

### Motion Panoramic Image Server Operation

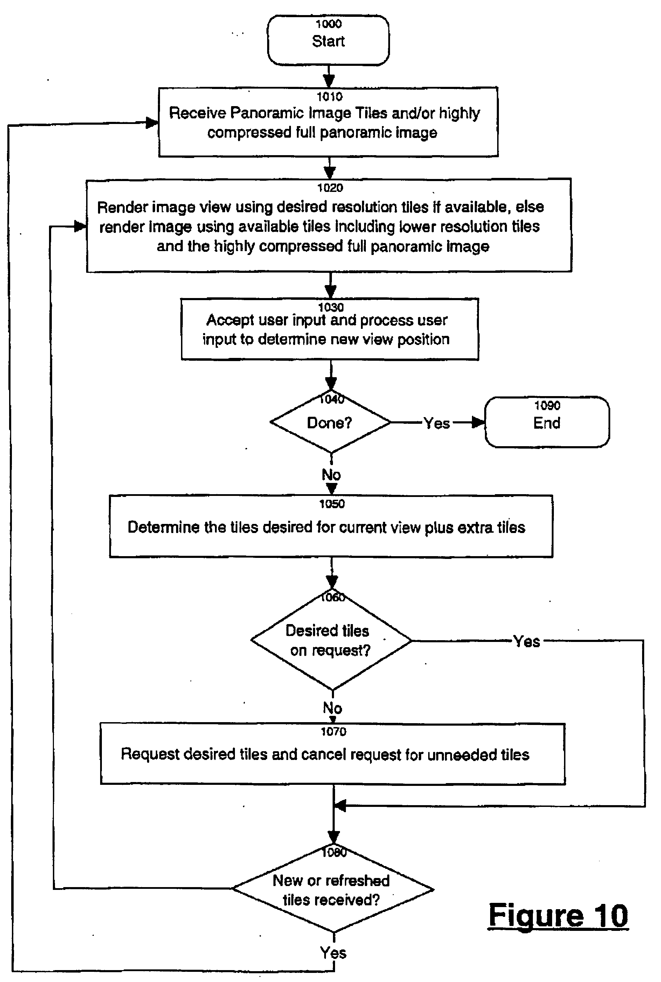

Figure 10 illustrates a flow diagram describing a method that a client system may follow to receive information and render an image. It should be noted that Figure 10 only illustrates one possible embodiment of a client system and that significant variations may be created. For example, several of the steps described in Figure 10 such as receiving tiles and rendering an image may be performed concurrently. Alternatively, less processing could be performed in the client system and more processing could be performed in the server.

Referring to step 1010 of Figure 10, the client receives any and all request panoramic image tiles and highly compressed full panoramic images transmitted by the server. At step 1020, the client attempts to render an image for the current view position. Ideally, the view will be rendered with the tiles needed for the view. However, if the client does not have the desired tiles, then the client renders an image of the current view using the available tiles for the view, tiles from lower resolution tiers, and the most recently received version of the highly compressed full panoramic image.

After rendering an image frame, the client system accepts input from a user at step 1030. The client system may accept input such as directional commands from a computer mouse that pans the view within the panoramic image. The client may also accept commands that zoom-in and change the vertical viewing angle.

The client system then processes the user input to the server system at step 1030 to determine a next view position. At step 1040, the client system determines if the input specifies that the user is done viewing the panoramic image information. The client panoramic image-rendering program will terminate when the user no longer wishes to view the panoramic image.

At step 1050, the client system determines the frame tiles that are needed to create the new view position. The client system also determines if it should request tiles that are just out of the current view but are likely to be needed in the future. Specifically, the client determines if the current view is near the edge of a tile. If the client's view is near the edge of a tile, then the client will request tiles that are just outside of the client's current view. The tiles just out of view are requested such that if the client moves the view beyond the edge of the tile, then the client will be able to create a view without having to request and wait for the server to then send the needed tile. Thus, the client anticipates small view movements and is prepared to generate a view. However, if the user makes a sudden large view change, then the client rendering engine can always fall back to the highly compressed version of the full panoramic image.

Furthermore, at step 1050, the client system determines if any currently requested tiles are no longer needed. Tiles that are no longer needed consume valuable bandwidth such that the client system should unsubscribe from tiles that are no longer needed.

After determining the tiles needed for the current view, the client system determines at step 1060 if the needed tiles have already been requested and if there are no unnecessary tiles on request. If the needed tiles have already been requested and there are no unnecessary tiles on request, then the client system does not need to change the tile subscriptions. However, if new tiles are needed or currently subscribed tiles are no longer needed, then the client system sends a request to the server at step 1070 that changes the tile subscription.

At step 1080, the client system determines if any new frame tiles or compressed panoramic image frames have been received. If new frames have been received, then the method proceeds back to step 1010 to accept the new frames. Otherwise, the method proceeds back to step 1020 to render a new view image using the currently available tiles and the highly compressed full panorama image information. A different image may be generated from the same frame information if the user has shifted the view.

### Overlapping Tile embodiment

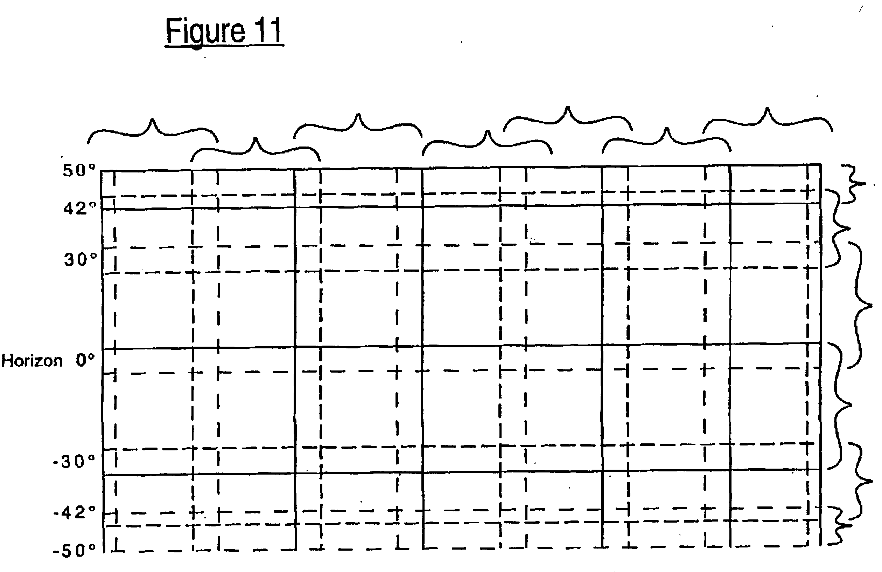

In one proposed embodiment, the panoramic image intermediate planar representation is divided into overlapping tiles. An example of this is provided in Figure 11. By dividing the intermediate planar representation into overlapping tiles, a degree of hysteresis is provided such that small back and forth view changes will not cause the client system to oscillate requests for new tiles.

### A Second Motion Panoramic Image Distribution System Embodiment

The selective tile transmission system described in the previous section provides a useful method of delivering motion panoramic image information in a unicast environment where each client receives a unique individual data stream. However, since the motion panoramic server must send out a unique data stream to each client, there will be a significant amount of redundant information being transmitted. To reduce the amount of redundant information being transmitted, the present invention also introduces a second multicast motion panoramic image serving system.

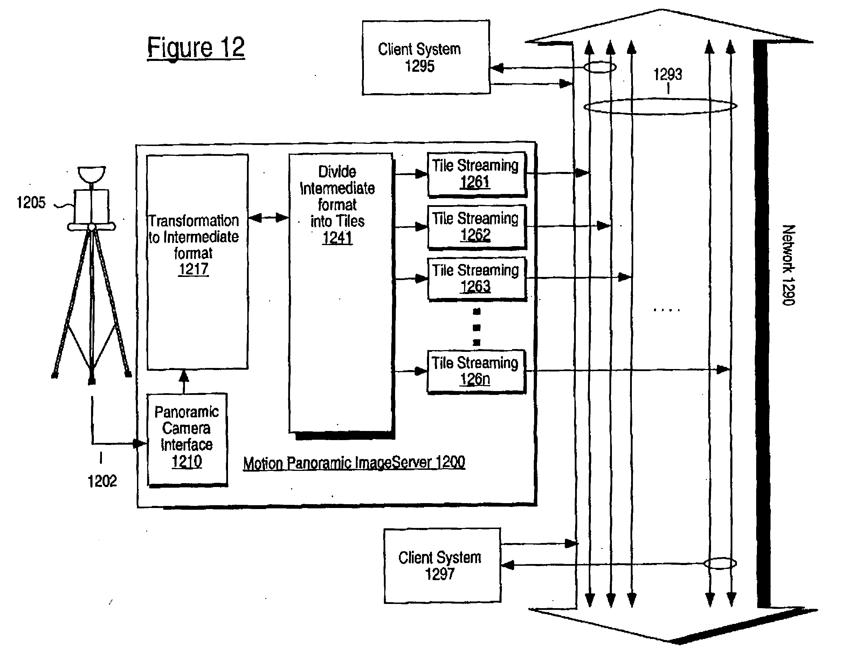

Figure 12 illustrates a multicast motion panoramic image serving system constructed according to the teachings of the present invention. In the system of Figure 12, a motion panoramic camera system 1205 delivers a series of high-resolution panoramic images across a high bandwidth link 1202 to a motion panoramic server 1200. A Panoramic Camera Interface 1210 handles the communication with the motion panoramic camera system 1205. A transformation unit 1217 transforms the raw panoramic image frames into an intermediate planar representation. As previously set forth, two possible intermediate planar representations are cylindrically encoded intermediate planar representation and spherically encoded intermediate planar representation.

After a panoramic image frame has been transformed into an intermediate planar representation, the intermediate planar representation is divided into individual tiles by unit 1241. After dividing the intermediate planar representation into individual tiles, a set of tile streaming units 1261, 1262, 1263, ... 126n transmit the tiles on multicast channels 1293 on a high bandwidth network 1290. Specifically, each tile position is assigned its own multicast channel.

To display a view within a motion panoramic image, each client system subscribes to the multicast channels that carry the tiles needed to construct the desired view. For example, client system 1295 needs the two tiles delivered by tile streaming units 1261 and 1262 such that client system 1295 subscribes to the multicast channels transmitted by those tile streaming units.

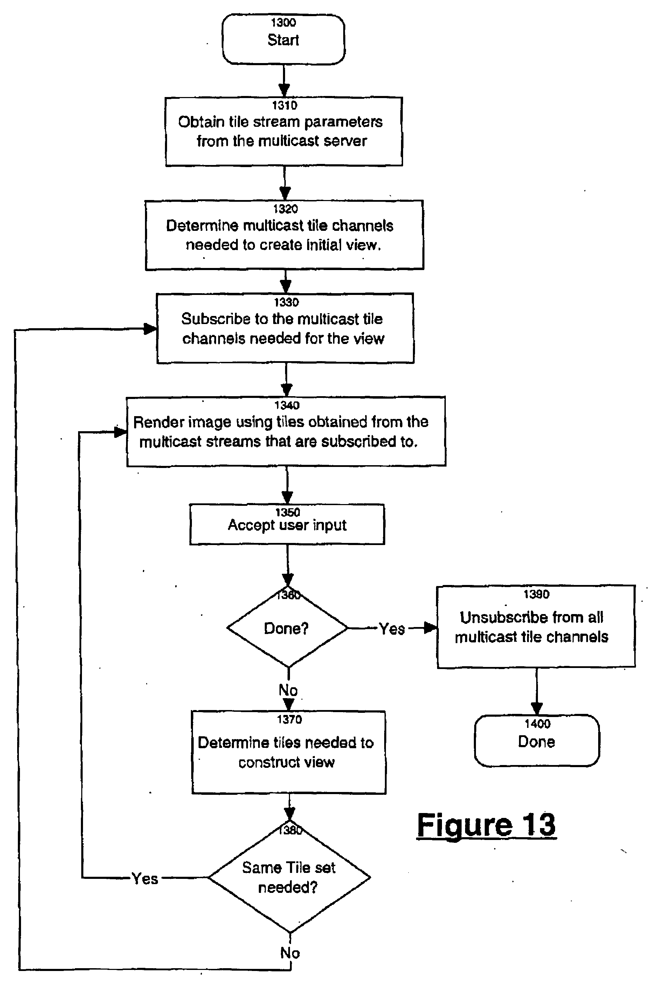

Figure 13 provides a flow diagram that describes one possible method that a client system may follow to render a view from a motion panoramic server constructed according to the teachings of Figure 12. Initially, at step 1310, the client system subscribes to the multicast panoramic tile channels necessary to render a view from an initial view location. Routers and switches that couple the client system to a main multicast backbone will perform the necessary operations in order to begin delivering the subscribed multicast panoramic tile channels.

Next, at step 1320, the client system will render an image of the current view using the information from the subscribed multicast panoramic tile channels. It should be noted that other client systems will share the same multicast channels such that bandwidth is conserved.

At step 1330, the client system accepts input from the user. The client system may accept input such as directional commands from a computer mouse that pan and tilt the user's view within the motion panoramic image.

After accepting the user's input, the client system analyzes the user's input. If the user has indicated that he is done viewing the motion panoramic image at step 1340, then the client system unsubscribes from all the multicast tile channels and will stop displaying images as set forth in step 1370.

If the user's input changes the position of the view within the motion panoramic image, then the client system determines the tiles that will be necessary to render the new view position at step 1350. Specifically, referring back to Figure 5, the client system determines which tiles comprise the current view location. At step 1360, the client determines if only the same tiles that are already subscribed to are needed. If so, then the method proceeds back to step 1320 to render a subsequent image view frame.

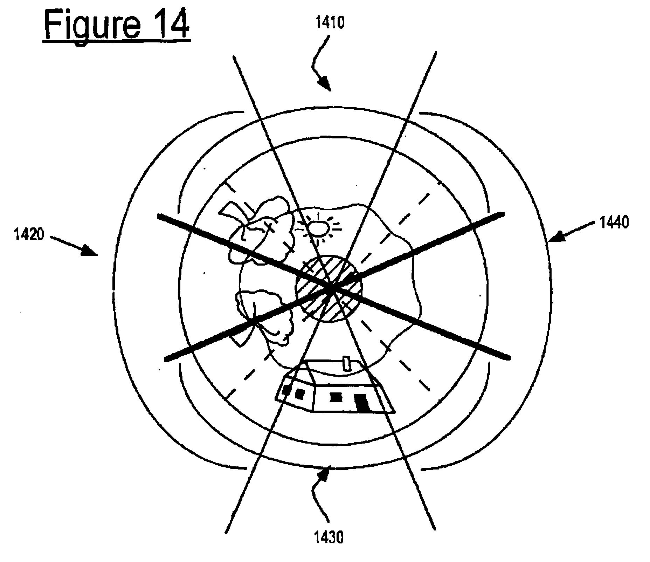

If different tiles are needed, the client system proceeds to step 1310. At step 1310, the client system subscribes to the multicast tile channels needed to render the current view. To limit the number of multicast channels used, the number of tiles that the panoramic image is divided into should be kept small. Figure 14 illustrates one possible way of dividing the original source panorama. In the embodiment of Figure 14, the source panorama is divided into four quadrants: an upper quadrant, a left quadrant, a right quadrant, and a lower quadrant. (The quadrants are illustrated using dotted lines.) Each quadrant becomes the source of a multicast channel. Thus, only four multicast channels are required.

To handle pans of the user's view, the information supplied for each quadrant should overlap the other quadrants such that only one multicast channel needs to be subscribed to. Ideally, the overlap area will be at least as large as a client view. Referring to Figure 14, a set of overlapping quadrants are displayed: overlapping upper quadrant 1410, overlapping left quadrant 1420, overlapping lower quadrant 1430, overlapping right quadrant 1440.

If very fast pans occur, the multicasting embodiment may also include a highly compressed full panoramic image channel. The highly compressed full panoramic image channel would occasionally transmit a highly compressed version of the full panoramic image such that a view in any direction could be created.

To divide the processing that must be performed, multiple servers may be used. For example, a first server could generate and serve the multicast channel carrying the overlapping upper quadrant 1410, a second server could generate and serve the multicast channel carrying the overlapping left quadrant 1420, and so on.

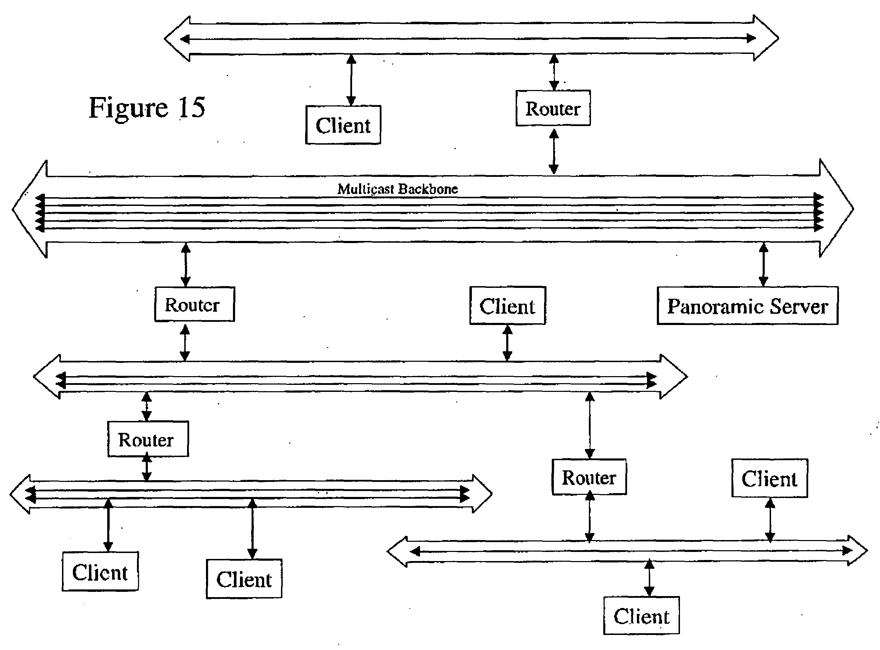

Figure 15 graphically illustrates how network bandwidth is conserved using a multicast type of system. Specifically, a panoramic image server transmits all the tile channels on a multicast backbone. Various routers coupled to the multicast backbone only route multicast channels subscribed to by clients connected to their subnetworks. By routing only the multicast channels needed by clients connected to their subnetworks, the routers limit the tile information carried by the subnetworks.

### Generality of the Invention

The invention has general applicability to various fields of use, not necessarily related to the services described above. For example, these fields of use can include one or more of, or some combination of, the following:
- As noted above, the invention does not apply only to immersive imagery, are also to non-immersive techniques, such as streaming imagery, ordinary audio visual presentations, or other presentation techniques. Moreover, there is no particular requirement that the invention must apply to presentations of real-world events or simulations thereof. It is entirely possible that the invention could be applied to artificial visualizations of databases, telemetry, or other information.
- Moreover, as noted above, the invention does not apply only to view direction or zooming, but may also be responsive to other biometric feedback. For example, the invention may be responsive to sound (such as spoken words by the viewer 160, or other utterances, expletives, laughter, or other noises). Similarly, the invention may be responsive to other biometric feedback. For example, without limitation, other biometric feedback can include one or more of, or some combination of, the following: heart rate, blood pressure, breathing rate, or other semi-voluntary bodily functions.
- As noted above, the presentation client 120 is primarily in charge of what is displayed to the viewer 160, and performs most of the computation that otherwise might be performed by the presentation server 110. This allows the presentation server 110 to service a large number of presentation clients 120, without undue load. For example, the presentation server 110 will typically send information to the presentation client 120 in a compressed form (the information already having been stored at the presentation server 110 in a precompressed form), thus leaving the task of decompressing that information to the presentation client 120.
- Similarly, the presentation client 120 is primarily in charge of which tiles of the immersive presentation 210 are presented to the viewer 160, and at what resolution those tiles are presented. However, the presentation server 110 does send a relatively low-resolution panoramic view of the entire immersive presentation 210 to the presentation client 120, so that the latter can deliver relatively rapid view changes to the viewer 160 even when new high-resolution tiles desired by the viewer 160 are not rapidly available to the presentation client 120.

Other and further applications of the invention in its most general form, would be clear to those skilled in the art after perusal of this application, and are within the scope and spirit of the invention.

### Alternative Embodiments

Although preferred embodiments are disclosed herein, many variations are possible which remain within the concept, scope, and spirit of the invention, and these variations would become clear to those skilled in the art after perusal of this application.

## Claims

1. A method including steps of
collecting log information from a set of viewers in response to at least a portion of a presentation to said viewers;
recording said log information for later access.

2. A method as in claim 1, wherein said later access includes review of said log information by a person other than said viewers.

3. A method as in claim 1, wherein
said set of viewers includes a plurality of individual viewers; and
said log information includes a statistical measure of said set of viewers different from said log information for any one particular viewer.

4. A method as in claim 1, wherein said later access includes processing said log information for a measure of said log information.

5. A method as in claim 4, wherein said measure of said log information includes a testing value for said viewers.

6. A method as in claim 4, wherein said measure of said log information includes a difference value between said viewers and a normative score for said log information.

7. A method as in claim 4, wherein said measure of said log information includes a difference value between said viewers and a preferred score for said log information.

8. A method as in claim 4, wherein said measure of said log information includes at least one clustering measure for said viewers in response to said log information.

9. A method as in claim 1, wherein said later access includes processing said log information for a measure of said presentation.

10. A method as in claim 9, wherein said measure includes a value for goodness of fit between said viewers and said presentation.

11. A method as in claim 9, wherein said measure includes a value for quality of said presentation at attracting attention of said set of viewers to at least one selected portion of said presentation.

12. A method as in claim 11, wherein said selected portion includes at least one of: an advertisement, a product placement in said presentation, a selected personality placement in said presentation.

13. A method including steps of
collecting log information from a set of viewers in response to at least a portion of a presentation to said viewers; and
measuring a degree of viewer interest in said portion in response to said log information.

14. A method as in claim 13, wherein said degree of viewer interest relates to a product appearing in said portion.

15. A method as in claim 13, wherein said degree of viewer interest relates to a value of said portion, said value relating to at least one of: educational value, entertainment value, monitoring value, testing value, training value.

16. A method including steps of
collecting log information from a set of viewers in response to at least a portion of a presentation to said viewers; and
altering at least said portion in response to said log information.

17. A method as in claim 16, wherein said alteration includes improvement, with regard to said portion, of at least one of: advertising value, product placement, entertainment value, education value, training value, monitoring value, testing value.

18. A method as in claim 16, wherein said alteration includes at least one annotation of said portion.

19. A method as in claim 16, including steps of presenting said altered presentation.

20. A method as in claim 19, wherein said steps of presenting include presenting said altered presentation to a second set of viewers.

21. A method as in claim 19, wherein said steps and presenting include
collecting further log information in response to at least said altered portion of said presentation; and
comparing said further log information responsive to said altered portion of said presentation, with said log information responsive to said original portion of said presentation.

22. A method including steps of
collecting log information from a viewer in response to at least a portion of a presentation to said viewer; and
personalizing said presentation in response to said log information.

23. A method is in claim 22, wherein said steps of personalizing include bookmarking at least one portion of said presentation.

24. A method is in claim 22, wherein said steps of personalizing include steps of
determining, responsive to said log information, whether to re-present at least a portion of said presentation to said viewer;
re-presenting at least said portion in response to said steps of determining.

25. A method including steps of
collecting log information from a set of viewers in response to at least a portion of a first presentation to said viewers;
generating a new presentation in response to said first presentation and in response to said log information.

26. A method is in claim 25, wherein at least one of said first presentation and said second presentation include at least a portion of an immersive presentation.

27. A method is in claim 25, wherein at least one of said first presentation and said second presentation include at least a portion of a non-immersive presentation.

28. A method is in claim 25, wherein said first presentation includes at least a portion that is generated in response to a real-time set of events.

29. A method as in claim 28, wherein
at least one of said first presentation and said second presentation include at least a portion responsive to orientation or placement of receiving equipment; and
said steps of generating include altering said orientation or placement.

30. A method as in claim 28, wherein
said steps of generating include altering at least one parameter of a set of receiving equipment, in response to said log information, during said real time set of events.

31. A method as in claim 28, wherein
said steps of generating include altering at least one parameter of a set of receiving equipment, said receiving equipment including at least one of: a catadioptric lens, an immersive image receiver, a non-immersive image receiver, and audio receiver, a visual image receiver.

32. A method as in claim 31, wherein said at least one parameter includes at least one of: orientation, position, compression rate, information transfer rate, focal length.

33. A method including steps of
collecting log information from a set of viewers in response to at least a first portion of a presentation to said viewers;
generating at least a second portion of said presentation in response to said log information.

34. A method as in claim 33, wherein said steps of generating include selecting said second portion from a plurality of alternative presentation plot lines.

35. A method is in claim 33, wherein said steps of generating include selecting said second portion from a plurality of alternatives.

36. A method as in claim 33, wherein said second portion is responsive to a set of parameters for receiving equipment, said selection being responsive to said log information.

37. A method as in claim 36, wherein said set of parameters for said receiving equipment include at least one of:
a selection of a subset of said receiving equipment; or
a selection of a set of parameters for said receiving equipment, said set of parameters including at least one of: an item of interest, a viewing angle.

38. A method as in claim 36, wherein said set of parameters for said receiving equipment include a selection of a proxy viewer of said presentation, whereby said second portion is responsive to said log information for said proxy viewer.

39. A method is in claim 38, wherein said proxy viewer includes at least one of: an expert reviewer of said presentation, a narrator of said presentation, or a popular figure present at a set of real-time events associated with said presentation.

40. A method including steps for
collecting first log information from a first set of viewers in response to at least a portion of a presentation to said viewers;
collecting second log information from a second set of viewers not equal to said first set of viewers in response to said portion; and
comparing said first log information and said second log information.

41. A method as a claim 40, including steps for measuring a difference between said first set of viewers and said second set of viewers in response to said steps of comparing.

42. A method as in claim 40, wherein a result of said steps of comparing includes at least one of:
a determination of a likelihood that said second set of viewers are truthful in response to selected questions;
a determination of a measure of attentiveness for said second set of viewers;
a determination of a measure of experience for said second set of viewers.

43. A method as a claim 40, wherein said first set of viewers includes a control population of presumed normal individuals.

44. A method is in claim 40, wherein said first set of viewers includes a set of clustered subpopulations.

45. A method as in claim 40, wherein said first set of viewers includes a set of subpopulations selected in response to at least one of: demographic information, expertise regarding a selected field of knowledge, marketing information, psychological or psychometric information.

46. A method including steps for
collecting log information from a set of viewers in response to at least a portion of a presentation to said viewers;
collecting biometric information associated with said log information in response to said portion; and
controlling a process in response to a combination of said log information and said biometric information.

47. A method as in claim 46, wherein said biometric information includes at least one of:
an aggregate value of biometric information from a plurality of said set of viewers; or
sounds made by at least one of said set of viewers.

48. A method including steps of:
collecting log information from a set of viewers in response to at least a portion of a presentation to said viewers; and
providing said log information to a set of customers.

49. A method as in claim 48, wherein said set of customers includes least one of: an evaluator of said set of viewers; or an evaluator of said presentation.

50. A method as in claim 48, wherein
said set of viewers includes a plurality of individual viewers; and
said log information includes a statistical measure of said set of viewers different from said log information for any one particular viewer; and
said steps of providing include providing said statistical measures without providing said log information for any one particular viewer.

51. A method is in claim 48, wherein
said steps of collecting include processing said log information for a measure thereof;
said steps of providing include providing only said measure without providing said log information for any one particular viewer.

52. A method is in claim 48, including steps for controlling a process associated with said set of the customers in response to said log information.

53. A method as in claim 52, wherein said process includes at least one of: an educational process, an evaluation process, a training process.

54. A method as in claim 52, wherein said process includes at least one of:
annotating at least a portion of said presentation;
bookmarking at least a portion of said presentation;
designating at least a portion of said presentation for an advertisement, a product placement in said presentation, or a selected personality placement in said presentation.

55. An article of manufacture, said article including a computer data signal embodied in readable medium, said readable medium including at least one of the following: a carrier wave, a memory, or a storage device; said data signal including a computer program to be performed at a presentation device, said program including
an element including instructions for collecting log information from a set of viewers in response to at least a portion of a presentation to said set of viewers; and
an element including instructions for recording said log information for later use.

56. In a method including providing services to a set of customers, said services including determining a measure of a response to a presentation, a computer program to be performed at a presentation device, said program including
an element including instructions for collecting log information from a set of viewers in response to at least a portion of said presentation;
an element including instructions for recording said log information for later use.

57. In a method including providing services to a set of customers, said services including determining a measure of a response to a presentation, a data structure including
an element including log information responsive to at least a portion of said presentation.
